**Europäisches Patentamt**

**European Patent Office**

**Office européen des brevets**

(11) Veröffentlichungsnummer: **0 102 401**
**B1**

# EUROPÄISCHE PATENTSCHRIFT

(45) Veröffentlichungstag der Patentschrift:
**22.07.87**

(21) Anmeldenummer: **82107896.1**

(22) Anmeldetag: **27.08.82**

(51) Int. Cl.⁴: **C 02 F 5/08,** C 23 F 11/18,
C 02 F 1/46

(54) **Verfahren zur Vorbeugung von Steinablagerung in Wassersystemen.**

(43) Veröffentlichungstag der Anmeldung:
**14.03.84 Patentblatt 84/11**

(45) Bekanntmachung des Hinweises auf die Patenterteilung:
**22.07.87 Patentblatt 87/30**

(84) Benannte Vertragsstaaten:
**AT BE CH DE FR GB IT LI NL SE**

(56) Entgegenhaltungen:
**DE-A-1 521 734**
**DE-A-2 030 430**
**DE-C-615 571**
**FR-A-1 003 149**
**US-A-3 951 753**

(73) Patentinhaber: **Guldager Electrolyse International
& Cie., Neudorfstrasse 4, CH- 4025 Basel (CH)**

(72) Erfinder: **Fabricius, Claus, Irisvej 16, DK- 3450
Allerod (DK)**

(74) Vertreter: **Knoblauch, Ulrich, Dr.- Ing.,
Kühhornshofweg 10, D-6000 Frankfurt am Main 1
(DE)**

EP 0 102 401 B1

**Beschreibung**

Die Erfindung betrifft ein Verfahren zur Behandlung von Wasser in einem Warmwassersystem durch Elektrolyse unter Verwendung lösbarer Aluminiumanoden in einem beheizbaren Behälter.

Durch die bekannte Elektrolyse-Behandlung ergibt sich nicht nur im beheizbaren Behälter ein kathodischer Schutz, sondern des in Lösung gehende Anodenmaterial wird vom Wasser mitgenommen und setzt sich an metallisch freien Stellen der Rohrwand an, so daß sich eine Schutzschicht gegen Korrosion ergibt. Eine ausreichend dicke Schutzschicht bildet sich jedoch erst in einem gewissen Abstand vom Behälter.

Die Wasserqualität ist bestimmend dafür, ob ein Wasser steinbildend oder korrosiv ist. Falls das Wasser infolge seiner chemischen Zusammensetzung steinbildend ist, wird sich diese Tendenz bei höherer Temperatur vergrößern, und es werden sich im Verlauf von kürzerer oder längerer Zeit so große Mengen absetzen, daß der Durchfluß in einem Rohrsystem blockiert wird.

Es gibt heute mehrere Verfahren zu Vorbeugung des Problems sowie zu seiner Behebung.

Eine Lösung besteht darin, die Härte des Wassers mit Hilfe einer Wasserenthärtungsanlage zu entfernen, wodurch ein Basenaustasch mit Hilfe von Natriumchlorid durchgeführt wird, so daß Kalziumhydrogenkarbonat in Natriumhydrogenkarbonat umgeändert wird, das nicht temperaturbedingt ausgefällt wird. Dieser Basenaustausch löst das Steinproblem, ändert aber die Wasserqualität entscheidend. Das Wasser wird sehr korrosiv, und es ist in der Praxis deshalb notwendig, besondere Maßnahmen zum Sohutze von sowohl Behälter als auch Rohrinstallation zu ergreifen. Ein weiterer Nachteil dieses Systems ist, daß das enthärtete Wasser nicht mehr als gewöhnliches Trinkwasser geeignet ist, sondern technisches Wasser ist, das nur in z.B. Wäschereien verwendet werden kann.

Wenn der Schaden geschehen ist, wird das Problem durch Vornahme einer Aussäuerung beseitigt, wobei Säure in passender Menge und Konzentration durch das Rohrsystem gepumpt wird. Dadurch ergeben sich aber wesentliche Probleme, weil die eingesetzten Säuren u.U. die Metalle beeinträchtigen können, und erfahrungsgemäß tritt während langer Perioden nach der Aussäuerung mißfarbiges Wasser auf, so wie es auch während des Aussäuerungsvorgangs selbst erforderlich ist, wesentliche Maßnahmen zur Vorbeugung von Unfällen zu treffen, was eine Totalaussäuerung sehr aufwendig macht.

Es ist bekannt, daß sich Kalkablagerungen mit Hilfe eines Kohlensäurezusatzes auflösen lassen (FR-A-10 03 149). Dies geschieht durch einen $CO_2$-Überschuß, der das abgelagerte Karbonat in lösbares Bikarbonat umsetzt.

Es ist ferner bekannt (DE-C-615 571), eine Schutzschicht auf die Wandungen von Wasserleitungsrohren aufzubringen, die normalerweise weiches Wasser führen. Hier soll $CO_2$ über einen Marmorfilter oder ein anderes Kalzium- oder Magnesiumkarbonat enthaltendes Material geführt werden. Es bildet sich lösbares Bikarbonat, das dann später zur Bildung der Schutzschicht führt.

Es ist auch ein Verfahren zur Aufbereitung von natürlichem Wasser zu Kühlwasser in Kreislauf-Kühlanlagen bekannt (DE-A-20 30 430). Hier soll durch Zugabe von $CO_2$ enthaltenden Gasen der Bikarbonatgehalt des Kühlwassers so eingestellt werden, daß ein pH-Wert zwischen 7 und 8,2 erhalten wird.

Der Erfindung liegt die Aufgabe zugrunde, ein Verfahren der eingangs beschriebenen Art aufzuzeigen, das das Problem der Steinablagerung ohne Verringerung der Wasserqualität auf eine leichte und preisgünstige Weise löst.

Dies geschieht erfindungsgemäß dadurch, daß dem Wassersystem im Bereich des Behälters $CO_2$ mindestens in einer solchen Konzentration zugesetzt wird, daß einer Steinablagerung im anschließenden Rohrsystem vorgebeugt wird.

Es liegt an und für sich nichts Überraschendes darin, daß man durch Dosierun von $CO_2$ in der Lage ist, Kalkstein zu lösen, aber in der Praxis ist dies nicht ohne weiteres möglich, weil die Steinblagerung im System niemals gleichmäßig verteilt ist und man deshalb nichts über die Verteilung des Steinbelags und der freien Metallflächen wissen kann. Die freien Metallflächen in Wassersystemen werden normalerweise angefressen, besonders dann, wenn ein Überschuß an $CO_2$ ständig den Aufbau einer Kalkschutzschicht verhindert. Durch die Kombination von Kohlensäuredosierung und Korrosionsschutz treten diese Probleme nicht auf, weil die Schutzschichtbildung in demselben Moment einsetzt, wo freie Metallionen an den Metallflächen der Brauchwasseranlage auftreten, und es hat sich erfahrungsgemäß sogar herausgestellt, daß $CO_2$ und $O_2$ den Aufbau einer wirksamen Schutzschicht begünstigen können.

Insbesondere wird mit der beanspruchten Kombination in einer Warmwasseranlage erreicht, daß sich schon in Behälternähe eine ausreichend dicke Schutzschicht aus dem Anodenmaterial bildet, die zumeist genügt um das Rohr von dem Korrosionsangriff des dort wirksamen $CO_2$-Überschusses zu schützen. Daher kann $CO_2$ in asreichender Menge eingeführt werden, um die gerade im ersten Teil des Rohrleitungssystems infolge der dort noch höheren Temperatur auftretenden Steinablagerungen zu verhindern oder zu beseitigen.

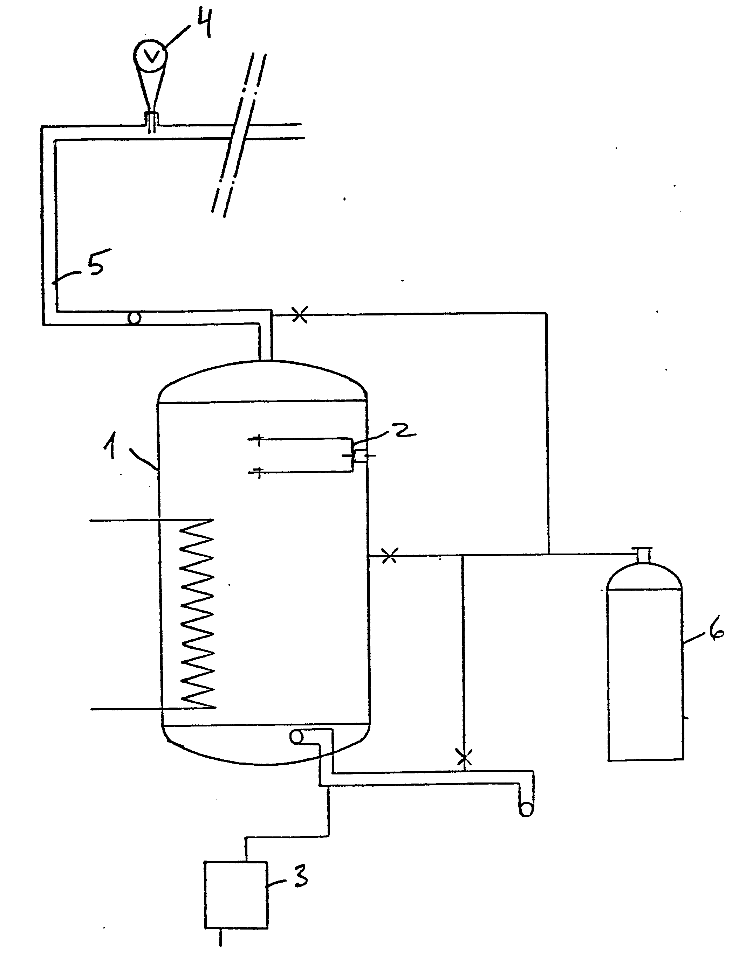

Die Erfindung soll im folgenden anhand der Zeichnung näher erläutert werden, die schematisch ein Wassersystem zeigt, auf das das Verfahren gemäß der Erfindung Anwendung findet.

Die Zeichnung zeigt ein Beispiel für ein Wassersystem mit einem Wasserbehälter 1, in dem eine Elektrolyseanlage 2 montiert ist. Die Funktion dieser Anlage ist in erster Linie, Korrosion zu verhindern. Neben der Elektrolyseanlage kann man zum Korrosionsschutz des Wassersystems Inhibitoren, z.B. Phosphat oder Silikat, aus einer Dosieranlage 3 zugeben. Die Elektrolyse- oder Dosieranlage kann aus einer oder mehreren Meßzellen 4 gesteuert werden. Die Aluminiumanoden der Anlage lösen sich, und der anodisch gebildete Salz lagert sich an Metallflächen in einem nachgeschalteten Rohrsystem 5 ab. Der Behälter selbst funktioniert als Katode und bedingt dadurch setzt sich Kalk in einer amorphen Verbindung ab, selbstverständlich auch in Abhängigkeit von der Temperatur, auf die das Wasser erwärmt wird, und da keine entsprechende Bindung von Kohlensäure erfolgt, wird das elektrolyseaufbereitete Wasser einen geringfügigen Überschuß an $CO_2$ aufweisen, das im Rohrsystem 5 kalkaggressiv ist.

Da der Überschuß an $CO_2$ bei diesem Verfahren an sich sehr gering ist, wird eine durch die Elektrolyseanlage bedingte Zersetzung der Steinablagerung so langsam vor sich gehen, daß man bei einer Anlage mit Wasserversorgungsproblemen wegen Steinablagerungen nicht auf die langsame Funktion der Elektrolyseanlage warten kann. Bei dem Verfahren gemäß der Erfindung wird deshalb weiteres $CO_2$ zugesetzt.

Die Dosierung kann z.B. durch Anschluß einer Druckflasche 6 mit $CO_2$ erfolgen, und die Zugabe kann sowohl am Eintritt des Behälters 1 am Behälter selbst oder am Behälteraustritt erfolgen, je nach den gegebenen Umständen und dem Zweck der Zugabe.

Die Dosierung von $CO_2$ kann eine vorübergehende Maßnahme zur Lösung eines akuten Problems sein, aber es gibt auch Warmwassersysteme, bei denen der Härtegrad des Eintrittswassers so hoch ist, und die Behandlungsmöglichkeiten in dem vorhandenen Behälter so ungünstig sind, daß die elektrolytische Aufbereitung in dieser Hinsicht nicht mehr ausreicht. Dies ist häufig auch der Fall bei gewissen industriellen Anlagen, bei denen die Temperatur 90°C übersteigt. Es wird bei solchen anlagen zweckmäßig sein, eine konstant geringe Dosierung zu haben, die nicht nur für die Vorbeugung von Kalkabsetzung im Rohrsystem von Bedeutung sein wird, sondern auch für eine vorteilhafte Verringerung der Kalkabsetzung an der Heizfläche im Behälter.

Das Kalk-Kohlensäuregleichgewicht, vgl. z.B. die Tillmannsche Kurve, zielt darauf ab, daß sich das Verhältnis zwischen Kalk und Kohlensäure in einem Gleichgewichtszustand befindet, der durch den Härtegrad und die Temperatur bedingt ist. Um so mehr Karbonat das Wasser enthält, um so mehr Kohlensäure muß das Wasser ebenfalls enthalten, damit keine Absetzung von Kalk stattfindet. Als Beispiel sei erwähnt, daß Wasser mit einer Karbonathärte von 10° tH (entsprechend einer Alkalität von 3,57) bei einer Temperatur von 10°C neben der im Karbonat gebundenen Kohlensäure von 78,5 mg 9,77 mg $CO_2$ als Gleichgewichtsstabilisator zu enthalten hat. Bei einer Verdoppelung des Karbonatgehaltes (Alkalität 7,14) müssen zur Aufrechterhaltung des Gleichgewichts neben natürlich gebundener Kohlensäure von 157 mg bei derselben Temperatur 78 mg $CO_2$ vorhanden sein, und Temperaturerhöhungen bedeuten, daß die Mengen von notwendigem $CO_2$ zur Vorbeugung des Absetzens noch größer werden. Es sind relativ große Mengen Kohlensäure zu dosieren, bevor die Gleichgewichtsmenge überschritten wird, so daß das Wasser steinlösend wird, und da das Gleichgewicht temperaturabhängig ist, wird es sich bei einigen Anlagen rentieren können, die Temperatur während verbrauchsmäßig stiller Perioden zu senken, so daß man dadurch den Kohlensäureüberschuß vergrößern kann. Die $CO_2$-Dosiermenge wird deshalb in Abhängigkeit von den vorgenannten Umständen von 10 mg je Liter Wasser bis mehr als 1000 mg variieren können.

Die Wirkung der Dosierung kann wie bereits erwähnt einen wesentlichen positiven Einfluß auf die Schutzschichtbildung in einem nachgeschalteten Rohrsystem haben, hat aber auch einen verbesserten Effekt auf die Elektrolyseanlage, weil der niedrigere pH-Wert sicherstellt, daß sich beispielsweise Aluminiumhydroxidhydrat im Wasser viel besser gelöst hält, so daß keine Tendenz zu unerwünschten Absetzvorgängen sowohl im Behälter als auch in Teilen des Rohrsystems, wo die Wassergeschwindigkeit wegen Konstruktionsverhältnisse zu gering sein kann, bestehen wird. Und in allen Fällen wird eine Dosierung von Kohlensäure von einem Verbrauchergesichtspunkt aus gesehen die Wasserqualität verbessern, und die Kombination mit Elektrolyse schützt die Installationen gegen sowohl Steinbildung als Korrosion.

Bei allen Verfahren wird es wie erwähnt zweckdienlich sein, galvanische Meßzellen 4 an meßtechnisch korrekten Stellen im Behälter und/oder Rohrsystem vorzusehen, wobei diese durch einen meßbaren Potentialunterschied bei der Inbetriebnahme der Anlage funktionieren, der aber infolge einer gewünschten Schutzschichtbildung total herabgesetzt wird, wonach man allein $CO_2$ und die sonstigen, erwähnten Inhibitoren je nach Bedarf dosieren kann.

## Patentansprüche

1. Verfahren zur Behandlung von Wasser in einem Warmwassersystem durch Elektrolyse unter Verwendung lösbarer Aluminiumanoden in einem beheizbaren Behälter, dadurch gekennzeichnet, daß dem Wassersystem im Bereich des Behälters $CO_2$ mindestens in einer solchen Konzentration zugetetzt wird, daß einer Steinablagerung im anschließenden Rohrsystem vorgebeugt wird.

2. Verfahren nach Anspruch 1, dadurch gekennzeichnet, daß die $CO_2$-Konzentration so groß gewählt ist, daß sie die Steinablagerung an der Heizfläche des Behälters verringert.

## Claims

1. Method for the treatment of water in a hot water system by electrolysis using soluble aluminum electrodes in a heatable vessel, characterized in that $CO_2$ is added to the water system in the area of the vessel in such a concentration that a scale deposit is prevented in the subsequent piping system.

2. Method according to claim 1, characterized in that the concentration of $CO_2$ is chosen so large that the scale deposit of the heating surface of the vessel is decreased.

## Revendications

1. Procédé de traitement de l'eau par électrolyse dans un système d'eau chaude, avec utilisation d'anodes solubles en aluminium dans un récipient chauffable, caractérisé en ce que l'on ajoute au système aqueux, dans la région du récipient, du $CO_2$ en une concentration telle que le dépôt de tartre soit prévenu dans la tuyauterie attenante.

2. Procédé sélon la revendication 1, caractérisé en ce que la concentration en $CO_2$ est choisie assez élevée pour diminuer le dépôt de tartre sur la surface de chauffe du récipient.